# EUROPEAN PATENT APPLICATION

(11) **EP 1 306 779 A2**
(43) Date of publication of application: **02.05.2003**
(21) Application number: 02445117.1
(22) Date of filing: 24.09.2002
(51) Int. Cl.: G06F 17/30

(54) **Devices and computer program product for processing information items**

(30) Priority: 26.09.2001 SE 0103244
(71) Applicant: Aktiebolaget SKF, S-415 50 Göteborg (SE)
(72) Inventor: Widbro, Linda, 43121 Göteborg (SE); Olsson, Magnus, 43168 Mölndal (SE); Sahlgren, Anders, 43136 Mölndal (SE); Köttritsch, Hubert, 3300 Amstetten (AT)
(74) Representative: Westman, Per Börje Ingemar

(57) **Abstract**

Device, system, computer program product, data repository, and a client communication device for processing information items related to one of a bearing, a seal, and a product including one of a bearing and a seal and applications. Key elements are constituted by an information item database (3) comprising information items (5) of which:
- each information item (5) being one of journal data item (7) and individual unit data item (9);
- each individual unit data item (9) comprising
   - an individual unit identity (15) of an individual unit;
   - at least one of text and image;
   - at least one link (17) linking at least one journal data item (7) related to the individual unit data item (9) to the individual unit data item (9);
- each journal data item (7) comprising at least one of text, image, symbol and binary data. Also the use of the device to trace individual units (5) is disclosed.

## Description

### TECHNICAL FIELD

The present invention relates to a device, a system, a computer program product, a data repository, and a client communication device for processing information items related to one of an individual unit and an application of an individual unit, where the individual unit is one of a bearing, a seal, and a product including one of a bearing and a seal.

### BACKGROUND OF INVENTION

The progress in the fields of computers and communications have reached a point where they now can offer increased competitive advantages for companies also within more mature technical fields, such as bearings and seals.

The increased knowledge contents of products and procedures related to these products, i.e. the knowledge necessary to be able to handle and use the products has increased during the last decade in several technical fields. One of these fields is the field that is related to bearings and seals. Even though the basic principles of today's bearings and seals in some cases are almost 100 years old, the requirements of these products have increased for instance in terms of functionality and reliability. The increased requirements on bearings, seals and products incorporating bearings or seals lay requirements for instance on how it is used, serviced and maintained. This implies an increased need of information concerning information related to individual bearings, seals and products incorporating bearings and seals. Today the opportunities of dealing with information concerning bearings, seals and their application is quite limited.

### SUMMARY OF INVENTION

The present invention deals with the processing of information items related to one of an individual unit and an application of an individual unit. The individual unit is one of a bearing, a seal, and a product including one of a bearing and a seal.

Based on the present invention a number of aspects are presented in the appended claims. These aspects are presented below.
1. A device for processing information items related to one of an individual unit and an application of an individual unit, the individual unit being one of a bearing, a seal, and a product including one of a bearing and a seal.
2. A client communication device for processing information items related to one of an individual unit and an application of an individual unit, the individual unit being one of a bearing, a seal, and a product including one of a bearing and a seal.
3. A system for processing information items related to one of an individual unit and an application of an individual unit, the individual unit being one of a bearing, a seal, and a product including one of a bearing and a seal.
4. A computer program product for processing information items related to one of an individual unit and an application of an individual unit, the individual unit being one of a bearing, a seal, and a product including one of a bearing and a seal.
5. A data repository for processing information items related to one of an individual unit and an application of an individual unit, the individual unit being one of a bearing, a seal, and a product including one of a bearing and a seal.
6. Use of the device to trace individual units.

The aspects above are based on the following features. The features cover, from different technical aspects, an information item database comprising information items, where
- each information item being one of journal data item and individual unit data item;
- each individual unit data item comprising
   o an individual unit identity of an individual unit;
   o at least one of text and image;
   o at least one link linking at least one journal data item related to the individual data item to the individual data item;
- each journal data item comprising at least one of text, image, symbol and binary data.

The information item database is arranged to be operated by a computer processor.

A first advantage of using the information item database is the secure and reliable way of handling information concerning an individual unit, an individual unit being one of a bearing, a seal, and a product including one of a bearing and a seal.

A second advantage of using the information item database is the secure and reliable way of handling information concerning the application of an individual unit. Here the term application should be interpreted as a designation or use of an individual unit.

A third advantage is that the information item database also assists a user of one of an individual unit and its application, in providing information of activities related thereto. For instance, in the information item database a user can find information concerning the latest service occasion, such as when it was performed and comments of the person/persons having performed it. Information of this kind may play an important role in guarantee commitments.

A fourth advantage is that the information item database also assists a user of one of an individual unit and its application, in providing detailed static information of the individual unit. For instance, in the information item database a user can find information concerning the actual dimensions, clearance, lubrication type, type of cage, preferred sealing, and the measuring protocol of the individual unit.

Also, for instance, information of more generic character, such as information concerning a type, or family, to which an individual unit belongs, compared to information concerning a specific individual item. Further, information concerning e.g. processes of manufacturing, testing, distributing, mounting, using, servicing, maintaining, and dismounting the individual unit is comprised in the individual unit data item. Thus an individual unit data item comprises information that is specifically related to an individual unit but also information which is applicable for other individual units.

An advantage of having the two types of information items, static-oriented and journal-oriented, is that these two types of structural elements increase the performance of the information item database to handle two types of information. Each information item being one of journal data item and individual unit data item increase a user's or a service provider's control of the information item database.

An advantage of each individual unit data item comprising an individual unit identity of an individual unit is that the contents of the individual unit data item type is limited to information concerning the individual unit. This increases the opportunity of perceiving an individual item as an individual, since an individual unit data item comprises data of an individual unit.

An advantage of having individual unit data item of at least one of text and image is that the utility of the information item database increases due to the possibility of handling up to two types of information. It should be pointed out that the text here also includes numbers.

An advantage of having at least one link linking at least one journal data item related to the individual data item to the individual data item is that the opportunities of searching and finding one or more journal data items related to a specific individual increases.

An advantage of having each journal data item comprising at least one of text, image, symbol and binary data is that the utility of the information item database increases due to the possibility of handling up to these four types of information types.

Thus, a key notion of the present invention is that an individual unit or its application is perceived as an individual.

According to the first aspect above, the device, it comprises a processor, a memory, and an input/output connection, and the memory comprises the information item database as described above. The processor is configured for:
- receiving at least one information item from a user using the input/output connection, and, in case the information item is a journal data item, also receiving a link to the individual unit data item in the information item database related to the journal data item;
- storing the at least one information item in the information item database and, in case the information item is a journal data item, linking it to the individual unit data item according to the link;
- receiving at least one request from the user requesting an information item; and
- retrieving from the information item database of the memory and transmitting the at least one requested information item to the user using the input/output connection.

An advantage of this aspect is that the device offers increased opportunities for a service provider, or a producer of individual units to fulfil customer needs in relation to individual units.

According to a preferred embodiment of the first aspect, the journal data items are related to at least one point of time in relation to at least one of the processes of manufacturing, testing, distributing, mounting, using, servicing, maintaining, and dismounting the individual unit. Generally, the term servicing is here considered to include refurbishing. It is also considered to include lubricating. It should be pointed out inputting point of time is not mandatory. For instance, in the manufacturing process of an individual unit, the points of time may not be inputted. This offers the advantage of being able to show information concerning at what time a specific process was undertaken in relation to an individual item. In the case of an application of an individual unit, the information may deal with what type of individual unit that was applied prior to substituting that individual unit.

According to another preferred embodiment of the first aspect, the individual unit data item further comprises at least one of actual dimensions, clearance, lubrication type, type of cage, preferred sealing, and the measuring protocol of the individual unit, and, information concerning at least one of manufacturing, testing, distributing, mounting, using, servicing, maintaining, and dismounting the individual unit. This offers the advantage of users having higher requirements concerning these parameters to request an individual unit having actual dimensions fulfilling the requirements. Also it offers the advantage of the user to obtain information of more generic character.

According to another preferred embodiment of the first aspect, each journal data item is provided with a link linking the journal data item to an individual unit data item. This offers the advantage of searching and finding, also known as tracing, individual units or applications of individual units.

According to another preferred embodiment, the input/output connection of the device is connectable to at least one of a data communication network, such as the internet, a movable media, and an input/output means of a computer. This increases the possibilities of using the device with a standard computer and communication environment.

According to another preferred embodiment, the processor is further configured for creating new information items. This facilitates for a service provider to offer a user or the service provider to increase the utility of the device since new individual units or applications of individual units can be defined within the information item database.

According to another preferred embodiment, the processor is further configured for deleting information items. This facilitates for a user or a service provider to increase the utility of the device since no longer needed or unwanted individual units or applications of individual units can be removed from the information item database.

According to another preferred embodiment, the information items are configured with access levels and the processor is configured for verifying a user in relation to the access levels. The access levels control rights of a user and a staff of the service provider in the following way.
- Create a new information item
- Delete an information item
- Add information to an information item
- Change information of an information item
- Remove information of an information item

This offers increased opportunities of controlling the security of the access to the information item database.

According to the second aspect above, the client communication device, it comprises a processor, a memory, and an input/output connection. The processor is configured for:
- adding information to at least one information item; using the input/output connection;
- transmitting at least one information item from a user using the input/output connection to the device for processing information items, and, in case the information item is a journal data item, also transmitting a link to the individual unit data item related to the journal data item;
- transmitting at least one request from the user requesting an information item; and
- receiving the at least one requested information item from the device for processing information items.

An advantage of this aspect is that the client communication device offers increased opportunities for a customer of a producer of individual units to fulfil its needs in relation to access to information concerning individual units.

According to a preferred embodiment of the client communication device the journal data items are related to at least one point of time in relation to at least one of the processes of manufacturing, testing, distributing, mounting, using, servicing, maintaining, and dismounting the individual unit. It should be pointed out inputting point of time is not mandatory. For instance, in the manufacturing process of an individual unit, the points of time may not be inputted. This offers the advantage of being able to show information concerning at what time a specific process was undertaken in relation to an individual item. In the case of an application of an individual unit, the information may deal with what type of individual unit that was applied prior to substituting that individual unit.

According to another preferred embodiment of the client communication device, each journal data item is provided with a link linking the journal data item to an individual data item. This offers the advantage of searching and finding, also known as tracing, individual units or applications of individual units. From the aspect of the client communication device, the tracing abilities are less abundant compared to the tracing abilities of the device according to the first aspect.

According to another preferred embodiment of the client communication device, the individual unit data item further comprises at least one of actual dimensions, clearance, lubrication type, type of cage, preferred sealing, and the measuring protocol of the individual unit and, information concerning at least one of manufacturing, testing, distributing, mounting, using, servicing, maintaining, and dismounting the individual unit This offers the opportunity of a user having a possibility of obtaining information concerning individual units or their application. In addition, this offers the advantage of users having higher requirements concerning these parameters to request an individual unit having actual dimensions fulfilling the requirements. Also the advantage of offering information of more generic character is provided.

According to another preferred embodiment of the client communication device, the processor is further configured for creating new individual unit data items. This facilitates for a user or a service provider to increase the utility of the device since new individual units or applications of individual units can be defined within the information item database.

According to the third aspect, the system, it comprises a system for processing information items related to at least one individual unit, in which the individual unit is one of a bearing, a seal, and a product including one of a bearing and a seal. The system comprises a device according to the first aspect and a client device according to the second aspect. The system offers the advantage of providing an information technology infrastructure that process information items. The presence of this infrastructure leads to an opportunity of having control over individual units and their applications, which decrease for instance the probability of individual unit malfunction.

According to the fourth aspect, the computer program product, which is loadable into the internal memory of a computer, comprising software code portions for performing the same procedures in relation to an information item database, when run on the computer.

This aspect covers the computer programs involved in the device according to the first aspect. The advantages are the same as the advantages of the information item database and the device according to the first aspect.

According to a preferred embodiment of the computer program product, the journal data items are related to at least one point of time in relation to at least one of the processes of manufacturing, testing, distributing, mounting, using, servicing, maintaining, and dismounting the individual unit. It should be pointed out inputting point of time is not mandatory. For instance, in the manufacturing process of an individual unit, the points of time may not be inputted. This offers the advantage of being able to show information concerning at what time a specific process was undertaken in relation to an individual item. In the case of an application of an individual unit, the information may deal with what type of individual unit that was applied prior to substituting that individual unit.

According to a preferred embodiment of the computer program product the individual unit, data item further comprises at least one of actual dimensions, clearance, lubrication type, type of cage, preferred sealing, and the measuring protocol of the individual unit and, information concerning at least one of manufacturing, testing, distributing, mounting, using, servicing, maintaining, and dismounting the individual unit. This offers the advantage of users having higher requirements concerning these parameters to request an individual unit having actual dimensions fulfilling the requirements. Also, it offers the advantage of providing information that is more generic to a user.

According to a preferred embodiment of the computer program product, each journal data item is provided with a link linking the journal data item to an individual data item. This offers the advantage of searching and finding, also known as tracing, individual units or applications of individual units.

According to the fifth aspect, the data repository, it comprises the computer program product, which comprises the information item database as described above.

The advantages are the same as the advantages of the information item database.

According to a preferred embodiment the journal data items are related to at least one point of time in relation to at least one of the processes of manufacturing, testing, distributing, mounting, using, servicing, maintaining, and dismounting the individual unit. It should be pointed out inputting point of time is not mandatory. For instance, in the manufacturing process of an individual unit, the points of time may not be inputted. This offers the advantage of being able to show information concerning at what time a specific process was undertaken in relation to an individual item. In the case of an application of an individual unit, the information may deal with what type of individual unit that was applied prior to substituting that individual unit.

According to another preferred embodiment, the data repository is incorporated in a memory.

According to the sixth aspect, the use of the device, according to the first aspect, to trace individual units is based on searching the information item database comprising the information items.

One purpose of tracing is in retrospect to go back to find explanations of poor quality in relation to processes of manufacturing. Also, tracing can be used to locate other individual units being related to a specific individual unit, for instance for finding individual units of the same batch. A trace can provide important information when it comes to finding explanations to e.g. unexpected malfunctions. Thus, a tracing facility provides an instrument of the quality work of the manufacturing. Tracing can explain causes of extraordinary events, such as malfunctions.

According to a first embodiment of the tracing aspect, the tracing is performed by entering one or more individual unit data items resulting in one or more traces. The traces will inform a user of what events an individual unit has been subjected to. In the information item database, this is achieved by searching for one or more individual unit identities among the individual unit data items to find out what events that may have caused an extraordinary effect on an individual unit. However, in an alternative embodiment also the individual unit information item is searched. In such a case, the links linking together individual data items with journal data items are used.

According to a second embodiment of the tracing aspect, the tracing is performed by entering one or more search words, or strings, in order to search and find individual units upon which one or more specific processes, or events, have been performed. Such a search is primarily performed among the journal data items. However, in an alternative embodiment also the individual unit information item is searched. In such a case, the links linking together individual data items with journal data items are used.

These two embodiments provides the advantage that it is possible to trace specific individual units, what events they have been subjected to, and when.

### BRIEF DESCRIPTION OF THE DRAWINGS

The invention will now be further described with reference to the following drawings.

Figure 1 schematically shows a preferred embodiment of an information item database comprising information items.

Figure 2 schematically shows the structure of an individual unit data item.

Figure 3 schematically shows the structure of a journal data item.

Figure 4 schematically shows a device incorporating an information item database.

Figure 5A shows a computer interface including an "Existing Bearing" section and an "Adding New bearing" section.

Figure 5B shows a computer interface including an "Adding New bearing" section.

Figure 5C shows a computer interface presenting both individual unit data items and journal data items.

Figure 5D shows a computer interface of the viewing and/or inputting of journal data items.

Figure 5E shows an application.

Figure 5F shows a computer interface including an "Existing Bearing" section, an "Adding New bearing" section and two individual unit data items.

Figure 6 schematically shows an embodiment of a client communication device.

Figure 7 schematically shows a system for processing information items.

### DESCRIPTION OF PREFERRED EMBODIMENTS

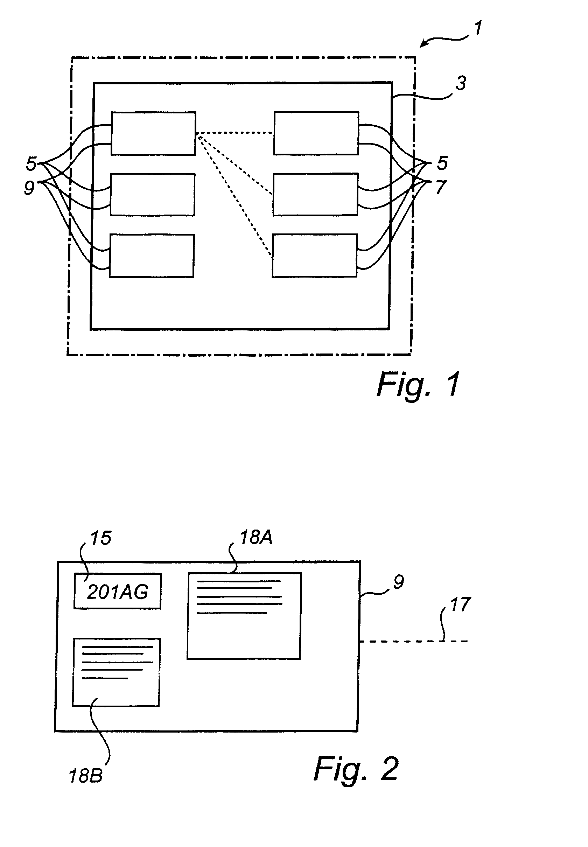

In Figure 1, a preferred embodiment of the memory 1 comprising an information item database 3 comprising information items 5 is disclosed. In the information item database 3, each information item 5 is one of a journal data 7 item and an individual unit data item 9. In one preferred embodiment the journal data items 7 are arranged in a journal data item portion 11 of the information item database 3.

Now turning to Figure 2, each individual unit data item 9 comprises an individual unit identity 15 of an individual unit, at least one of text and image, and at least one link 17 linking at least one journal data item related to the individual data item to the individual data item. In this embodiment the contents of the individual unit data item 9 is text, including figures/numbers. In another preferred embodiment, an image of an individual unit is used as an individual indicator. The individual unit data item 9 further comprises at least one of actual dimensions 18A, clearance, lubrication type, type of cage, preferred sealing, and the measuring protocol of the individual unit and, information 18B concerning at least one of manufacturing, testing, distributing, mounting, using, servicing, maintaining, and dismounting the individual unit.

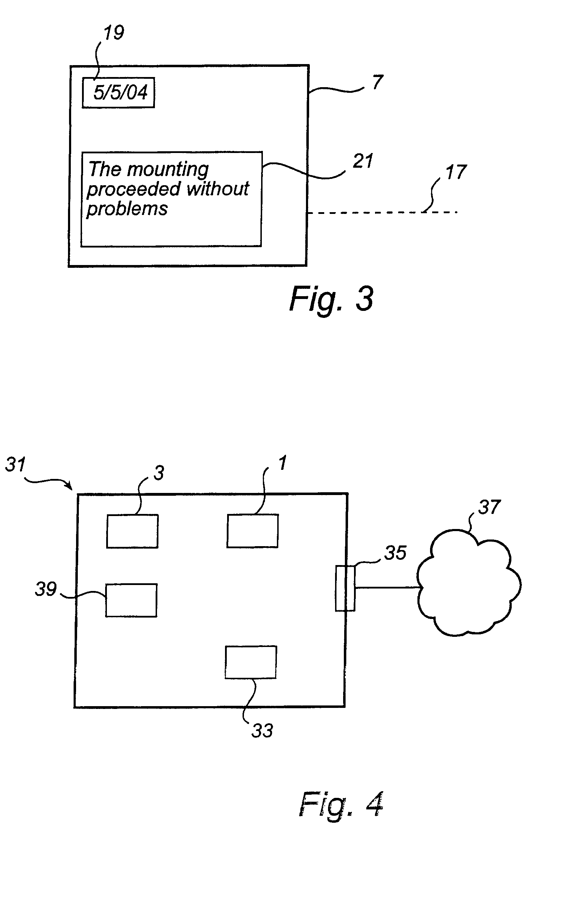

In another preferred embodiment, presented in Figure 3, the journal data items 7 are related to at least one point of time 19 in relation to at least one of the processes of manufacturing, testing, distributing, mounting, using, servicing, maintaining, and dismounting the individual unit. It should be pointed out inputting point of time is not mandatory. For instance, in the manufacturing process of an individual unit, the points of time may not be inputted. The process data 21 shown in Figure 3 is a mounting procedure. Further, each journal data item 7 comprises at least one of text, image, symbol and binary data. For instance, binary data include vibration data that was assembled at one date and to be analysed at later occasions.

In one embodiment, which is presented in Figure 4, the information item database 3 is incorporated in a device 31 for processing information items 5 related to one of an individual unit and an application of an individual unit. The individual unit is one of a bearing, a seal, and a product including one of a bearing and a seal. The device 31 comprises a processor 33, a memory 1, and an input/output connection 35. In one embodiment, the input/output connection 35 is connectable to the Internet 37.

The processor 33 is configured for:
- receiving at least one information item 5 from a user using the input/output connection 35, and, in case the information item 5 is a journal data item 7, also receiving a link 17 to the individual unit data item 9 in the information item database 3 related to the journal data item 7;
- storing the at least one information item 5 in the information item database 3 and, in case the information item is a journal data item 7, linking it 7 to the individual unit data item 9 according to the link 17;
- receiving at least one request from the user requesting an information item 5; and
- retrieving from the information item database 3 of the memory 1 and transmitting the at least one requested information item 5 to the user using the input/output connection 35.

In one embodiment, the device 31 also comprises presentation means 39 to present information items 3 for a service provider.

In another embodiment, each journal data item 7 is provided with a link 17 linking the journal data item 7 to an individual data item 9.

In another embodiment, the input/output connection 35 is connectable to at least one of a movable media and an input/output means, such as a floppy disk station, of a computer for facilitating utility in relation to various means of receiving data.

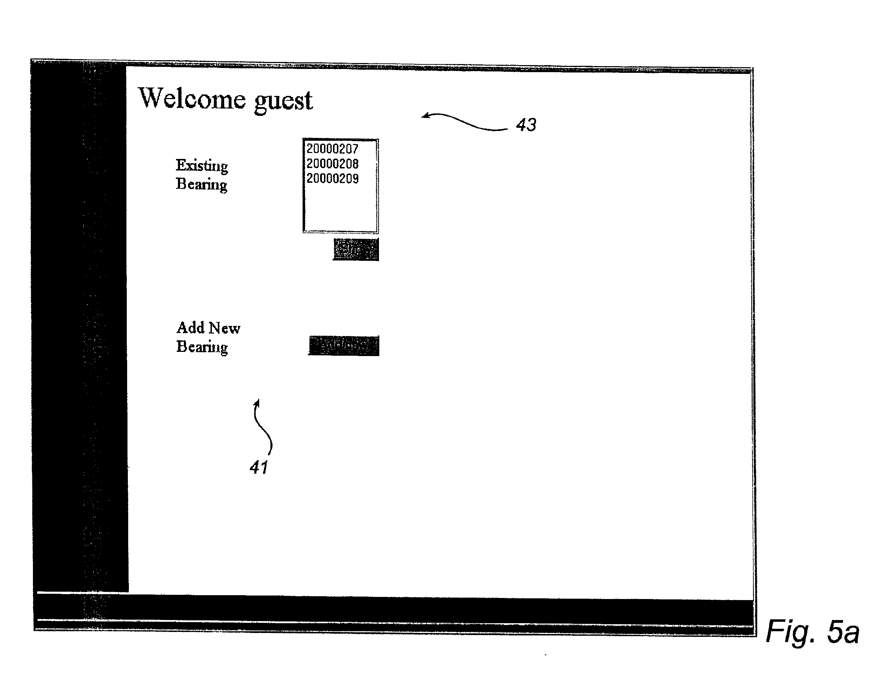

In another embodiment, in the form of a computer interface presented in Figure 5A, the processor 33 is further configured for creating new information items 3. In Figure 5A this is exemplified by an "Adding New bearing" section 41. The individual units and applications that are present in the information item database 3 can be presented. In Figure 5A, this is exemplified by the "Existing bearing" section 43.

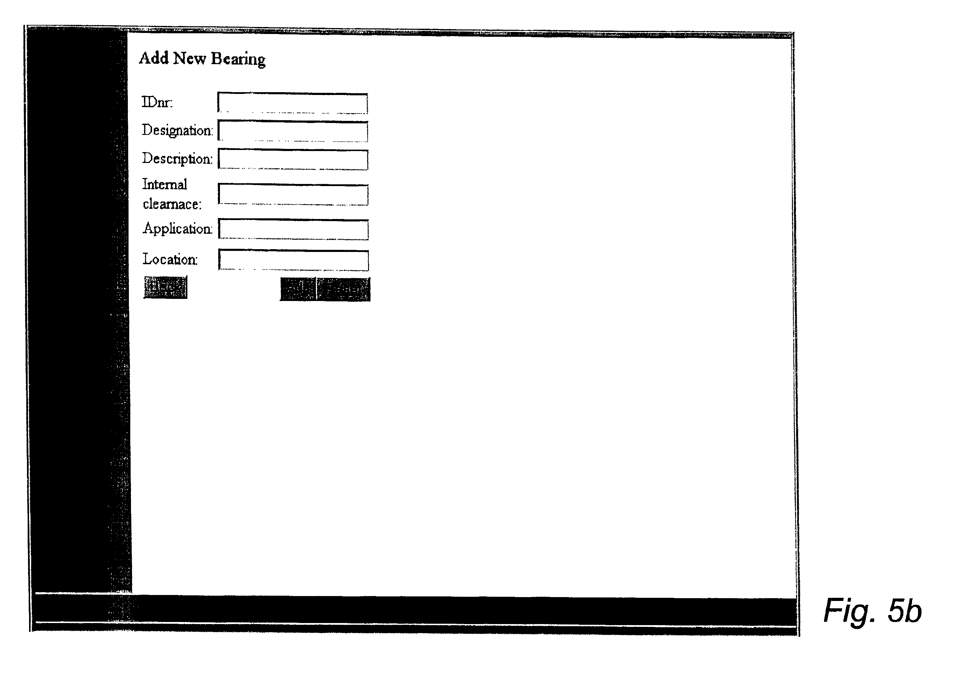

Figure 5B shows a computer interface of information to be inputted in the case of "Adding new bearing" setting. This also exemplifies the contents of the individual unit data item.

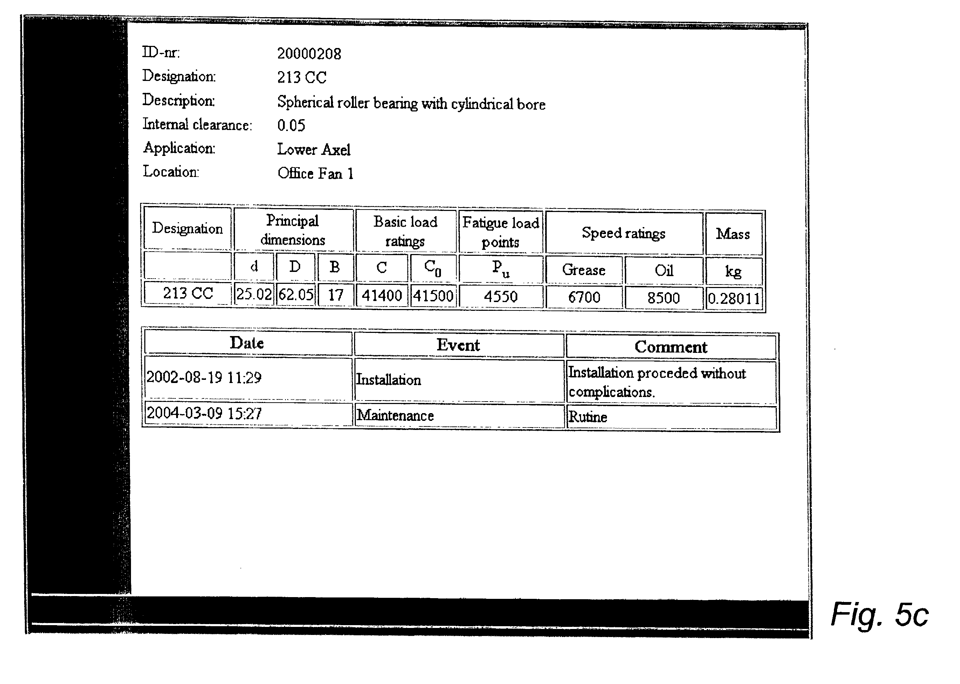

Figure 5C shows a computer interface presenting both individual unit data items (in the upper part of the interface) and journal data items (in the lower part of the interface under "Date", "Event", and "Comment").

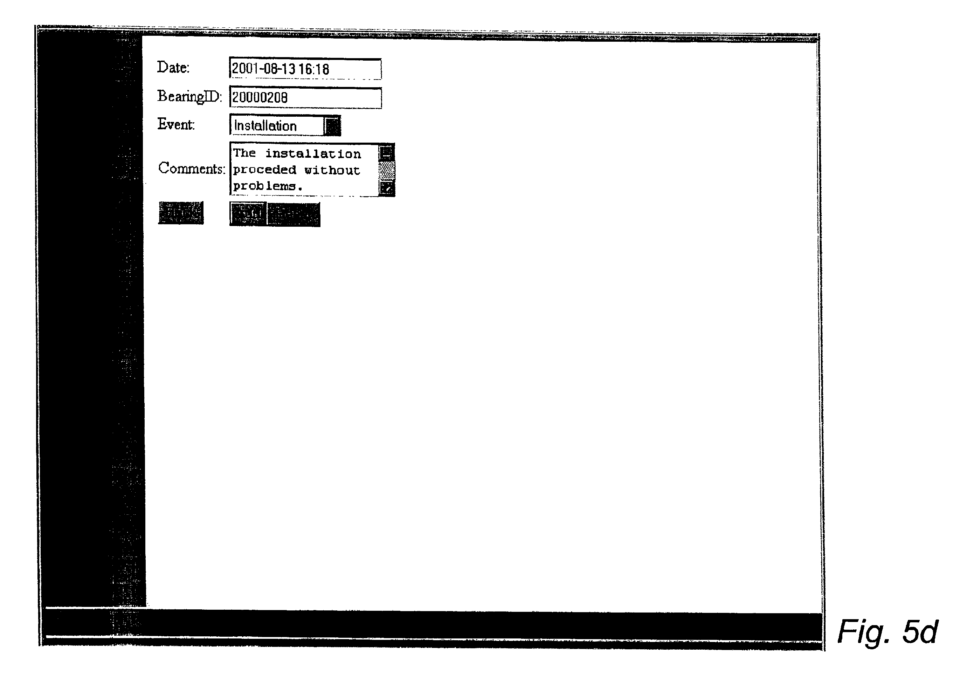

An alternative computer interface of the viewing and/or inputting of journal data items is presented in Figure 5D. By clicking on the "Add" button further information can be inserted.

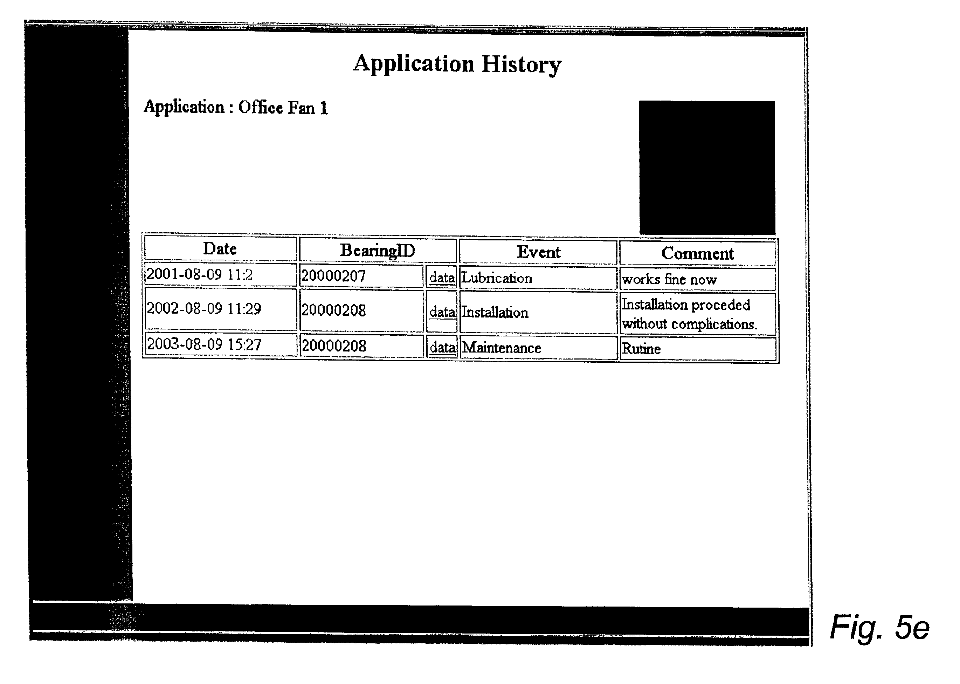

A computer interface presenting data in relation to an application is presented in Fig 5E. The application presented in Figure 5E is an "Office Fan 1" and it is provided with at least two individual units, in this case two bearings. In this embodiment, an image of the fan is presented in the upper right corner. As in the computer interface presented in Figure 5C, the interface shows information concerning "Date", "Event", and "Comment". However, in this embodiment the user is offered the possibility to obtain further data by pressing the "data" button. The data is here related to at least one individual unit data item.

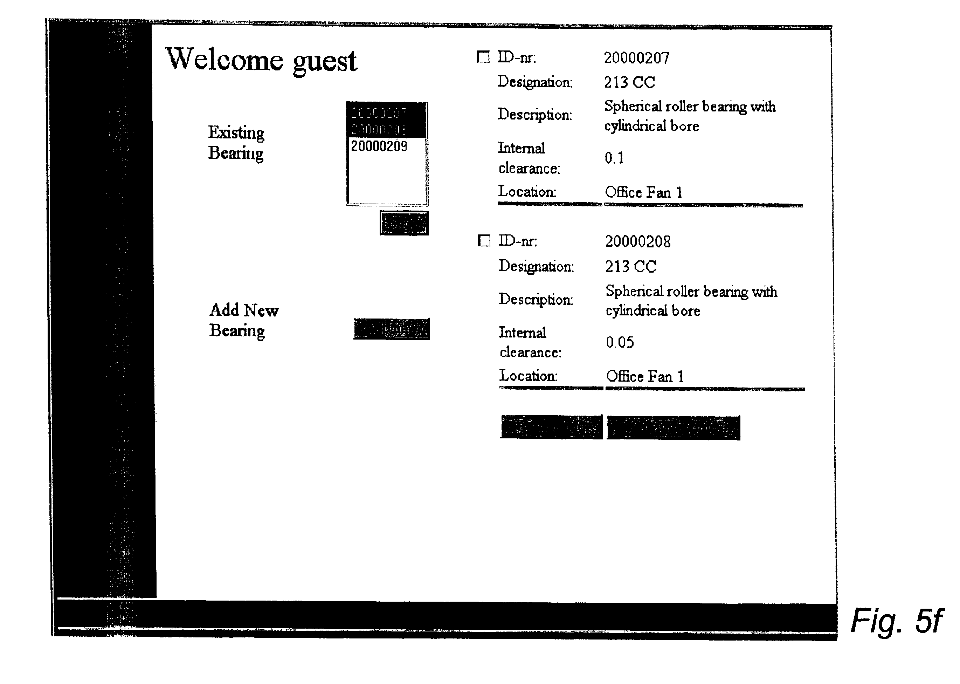

Figure 5F shows a computer interface generated by the device 31 and to be displayed on the presentation means 39 or at the location of a client communication device 41, which will be further described below. In Figure 5F two existing bearings (with identities 20000207 and 20000208, respectively) have been marked and further information is presented to the right of the two marked bearing.

In another embodiment, the processor 33 is arranged to delete information items 5 according to a request of a user or a service provider.

In another embodiment of the device, the information items 5 are configured with access levels and the processor 33 also being configured for verifying a user in relation to the access levels. An example of the access of a user and a service provider in relation to activities are presented in the following table.

| Activity | User | Service provider |
|---|---|---|
| Create a new information item | Yes | Yes |
| Delete an information item | No | Yes |
| Add information to an information item | Yes | Yes |
| Change information of an information item | No | Yes |
| Remove information of an information item | No | Yes |

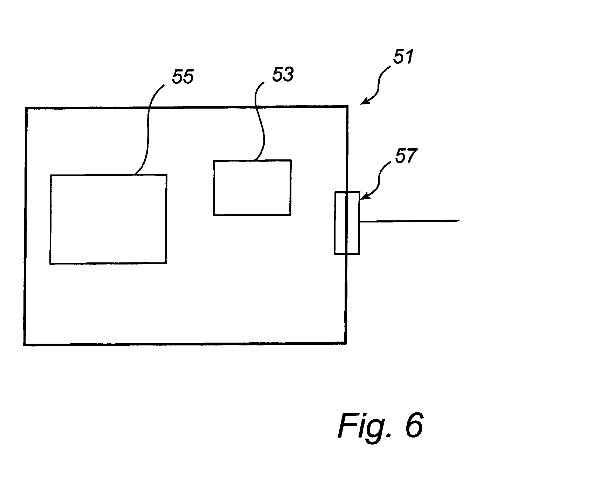

In Figure 6, an embodiment of a client communication device is presented. The purpose of the client communication device is arranged for communicating information items 5 in relation to the device 31 for processing information items 5. The information items 5 are related to one of an individual unit and an application of an individual unit. The individual unit is one of a bearing, a seal, and a product including one of a bearing and a seal. The client communication device 51 comprises a processor 51, a memory 55, and an input/output connection 57.

In another embodiment the client communication device is a handheld computer arranged to communicate via one of wired and wireless manners.

In another embodiment the client communication device is a personal computer.

The structure and function of the information items 5 in relation to the client communication device 51 being the same as described in the embodiment of the device 31 above.

The processor 53 is configured for:
- adding information to at least one information item 5; using the input/output connection 57;
- transmitting at least one information item 5 from a user using the input/output connection 57 to the device 31 for processing information items 5, and, in case the information item 5 is a journal data item 7, also transmitting a link 17 to the individual unit data item 9 related to the journal data item 7;
- transmitting at least one request from the user requesting an information item 5; and
- receiving the at least one requested information item 5 from the device 31 for processing information items 5.

The structure and function of the journal data items 7 in relation to the client communication device 51 are the same as described in the embodiment of the device 31 above.

The structure and function of the individual unit data items 9 in relation to the client communication device 51 being the same as described in the embodiment of the device 31 above.

In one embodiment of the client communication device 51, the processor 53 is further configured for creating new individual unit data items.

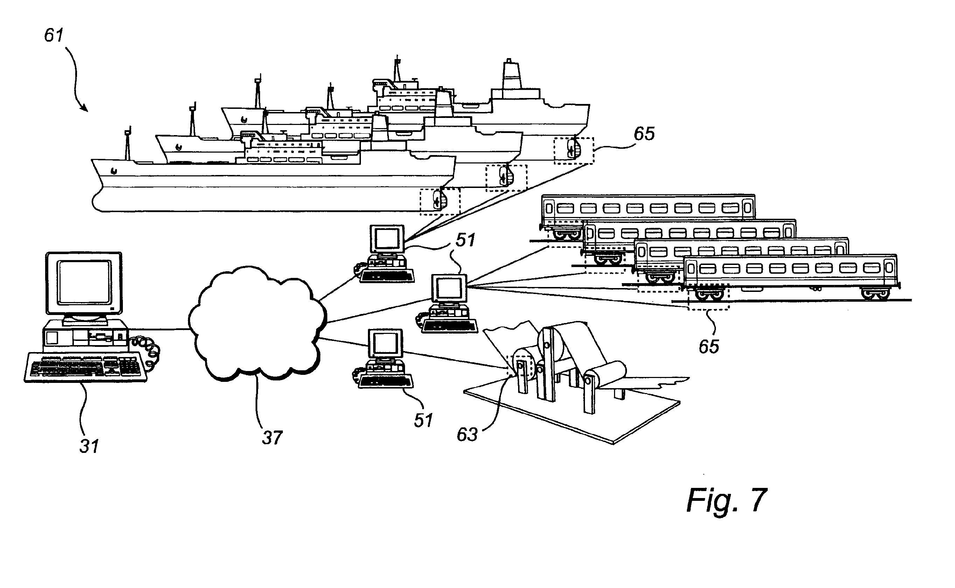

In Figure 7, a system 61 for processing information items 5 related to at least one individual unit, the individual unit being one of a bearing, a seal, and a product including one of a bearing and a seal is presented. In Figure 7, an individual unit 63, the individual unit being one of a bearing, a seal, and a product 65 including one of a bearing and a seal. In Figure 7, the following individual units and applications may be anticipated.

The following applications may be anticipated in Figure 7.
1. The camshaft of a boat
2. A bearing receiving section in paper manufacturing
3. A train bearing unit receiving section of a train or a tram

The following individual units may be anticipated in Figure 7.
1. A bearing supporting the camshaft of a boat
2. A bearing used in paper manufacturing
3. A train bearing unit potentially comprising more than a single bearing used in a train or a tram

Thus, it is clear that there are relations between an individual unit and its application. Keeping track of the application provides an opportunity of knowing what individual units that have been applied in a specific application. Also, it should be pointed out the application of the present inventions goes beyond the three applications discussed above.

The system 61 comprises a device 31 and a client communication device 51.

According to another preferred embodiment, a computer program product for processing information items related to one of an individual unit and an application of an individual unit is disclosed. The computer program product is loadable into the internal memory of a computer, comprising software code portions for performing the steps discussed above in relation to the device 41, when run on the computer. Due to the great resemblance to the computer software incorporated information item database 3 and the device 41 it will not be elaborated further.

According to another preferred embodiment, a data repository for processing information items related to one of an individual unit and an application of an individual unit is disclosed. The data repository is loaded into the memory 1 of the device 41. Due to the great resemblance to the computer software incorporated information item database 3 and the device 41 it will not be elaborated further.

According to another preferred embodiment related to the use of the device 41, to trace individual units is based on searching the information item database 3 comprising the information items 5.

One purpose of tracing is in retrospect to go back to find explanations of poor quality in relation to processes of manufacturing. A trace can provide important information when it comes to finding explanations to e.g. unexpected malfunctions. Thus, a tracing facility provides an instrument of the quality work of the manufacturing. Tracing can explain causes of extraordinary events, such as malfunctions.

According to a first embodiment of the tracing aspect, the tracing is performed by entering one or more individual unit data items 9 resulting in one or more traces. In the information item database 3, this is achieved by searching, based on search string methodology, for one or more individual unit identities 15 among the individual unit data items 9 to find what events that may have caused an extraordinary effect on one or more individual units. However, in an alternative embodiment also the individual unit information item 9 is searched. In such a case, the links 17 linking together individual unit data items 9 with journal data items 7 are used.

According to a second embodiment of the tracing aspect, the tracing is performed by entering one or more search words, or strings, in order to search and find individual units upon which one or more specific processes, or events, have been performed. Such a search is primarily performed among the journal data items. However, in an alternative embodiment also the individual unit information item is searched. In such a case, the links linking together individual data items with journal data items are used.

## Claims

1. Device (41) for processing information items (5) related to one of an individual unit and an application of an individual unit, the individual unit being one of a bearing, a seal, and a product including one of a bearing and a seal;
- the device (41) comprising a processor (33), a memory (1), and an input/output connection (35);
- the memory (1) comprising an information item database (3) comprising information items (5); where
- each information item (5) being one of journal data item (7) and individual unit data item (9);
- each individual unit data item (9) comprising
- an individual unit identity (15) of an individual unit;
- at least one of text and image;
- at least one link (17) linking at least one journal data item (7) related to the individual unit data item (9) to the individual unit data item (9);
- each journal data item (7) comprising at least one of text, image, symbol and binary data;
- the processor (33) being configured for:
- receiving at least one information item (5) from a user using the input/output connection (35), and, in case the information item (5) is a journal data item (7), also receiving a link (17) to the individual unit data item (9) in the information item database (3) related to the journal data item (7);
- storing the at least one information item (5) in the information item database (3) and, in case the information item (5) is a journal data item (7), linking it (7) to the individual unit data item (9) according to the link (17);
- receiving at least one request from the user requesting an information item (5); and
- retrieving from the information item database (3) of the memory (1) and transmitting the at least one requested information item (5) to the user using the input/output connection (35).

2. Device (41) according to claim 1, wherein the journal data items (7) are related to at least one point of time (19) in relation to at least one of the processes (21) of manufacturing, testing, distributing, mounting, using, servicing, maintaining, and dismounting the individual unit.

3. Device (41) according to claim 1, wherein the individual unit data item (9) further comprises at least one of actual dimensions, clearance (18A), lubrication type, type of cage, preferred sealing, and the measuring protocol of the individual unit and, information (18B) concerning at least one of manufacturing, testing, distributing, mounting, using, servicing, maintaining, and dismounting the individual unit.

4. Device (41) according to claim 1, wherein each journal data item (7) is provided with a link (17) linking the journal data item (7) to an individual data item (5).

5. Device (41) according to claim 1, wherein the input/output connection (35) is connectable to at least one of a data communication network, a movable media, and an input/output means of a computer.

6. Device (41) according to claim 1, wherein the processor (33) is further configured for
- creating new information items (5).

7. Device (41) according to claim 1, wherein the processor (33) is further configured for
- deleting information items (5).

8. Device (41) according to claim 1, wherein the information items (5) are configured with access levels and the processor (33) also being configured for verifying a user in relation to the access levels.

9. A client communication device (51) for communicating information items (5) in relation to a device for processing information items (5), the information items (5) being related to one of an individual unit and an application of an individual unit, the individual unit being one of a bearing, a seal, and a product including one of a bearing and a seal; wherein
- each information item (5) being one of journal data item (7) and individual unit data item (9);
- each individual unit data item (9) comprising
- an individual unit identity (15) of an individual unit;
- at least one of text and image;
- at least one link (17) linking at least one journal data item (7) related to the individual unit data item (5) to the individual data item (5);
- each journal data item (7) comprising at least one of text, image, symbol and binary data;
- the client communication device (51) comprising a processor (53), a memory (55), and an input/output connection (57) ;
- the processor (53) is configured for:
- adding information to at least one information item (5); using the input/output connection (57);
- transmitting at least one information item (5) from a user using the input/output connection (57) to the device for processing information items (5), and, in case the information item (5) is a journal data item (7), also transmitting a link (17) to the individual unit data item (9) related to the journal data item (7);
- transmitting at least one request from the user requesting an information item (5); and
- receiving the at least one requested information item (5) from the device for processing information items (5).

10. A client communication device (51) according to claim 9, wherein the journal data items (7) are related to at least one point of time (19) in relation to at least one of the processes (21) of manufacturing, testing, distributing, mounting, using, servicing, maintaining, and dismounting the individual unit.

11. A client device according (51) to claim 9, wherein
- each journal data item (7) is provided with a link (17) linking the journal data item (7) to an individual data item (9).

12. A client device according (51) to claim 9, wherein the individual unit data item (9) further comprises at least one of actual dimensions (18A), clearance, lubrication type, type of cage, preferred sealing, and the measuring protocol of the individual unit and, information (18B) concerning at least one of manufacturing, testing, distributing, mounting, using, servicing, maintaining, and dismounting the individual unit.

13. A client device (51) according to claim 9, wherein the processor (33) is further configured for
- creating new individual unit data items (5).

14. System (61) for processing information items (5) related to at least one individual unit, the individual unit being one of a bearing, a seal, and a product including one of a bearing and a seal, the system (61) comprising a device (41) according to claim 1 and a client device (51) according to claim 9.

15. Computer program product for processing information items (5) related to one of an individual unit and an application of an individual unit, the individual unit being one of a bearing, a seal, and a product including one of a bearing and a seal; wherein
- each information item (5) being one of journal data item (7) and individual unit data item (9);
- each individual unit data item (9) comprising
- an individual unit identity (15) of an individual unit;
- at least one of text and image;
- at least one link (17) linking at least one journal data item (7) related to the individual unit data item (9) to the individual unit data item (9);
- each journal data item (7) comprising at least one of text, image, symbol and binary data;
- the computer program product being loadable into the internal memory of a computer, comprising software code portions for performing the following steps, when run on the computer:
- receiving at least one information item (5) from a user using the input/output connection, and, in case the information item is a journal data item (7), also receiving a link (17) to the individual unit data item (9) in the information item database (3) related to the journal data item (7);
- storing the at least one information item (5) in the information item database (3) and, in case the information item (5) is a journal data item (7), linking it (7) to the individual unit data item (9) according to the link (17);
- receiving at least one request from the user requesting an information item (5); and
- retrieving from the information item database (3) of the memory and transmitting the at least one requested information item (5) to the user using the input/output connection.

16. Computer program product according to claim 15, wherein the journal data items (7) are related to at least one point of time (19) in relation to at least one of the processes (19) of manufacturing, testing, distributing, mounting, using, servicing, maintaining, and dismounting the individual unit.

17. Computer program product according to claim 15, wherein the individual unit data item (5) further comprises at least one of actual dimensions (18A), clearance, lubrication type, type of cage, preferred sealing, and the measuring protocol of the individual unit and, information (18B) concerning at least one of manufacturing, testing, distributing, mounting, using, servicing, maintaining, and dismounting the individual unit.

18. Computer program product according to claim 15, wherein each journal data item (7) is provided with a link (17) linking the journal data item to an individual data item (5).

19. Data repository for processing information items (5) related to one of an individual unit and an application of an individual unit, the individual unit being one of a bearing, a seal, and a product including one of a bearing and a seal; the data repository comprising an information item database (3) comprising information items (5) of which:
- each information item (5) being one of journal data item (7) and individual unit data item (9);
- each individual unit data item (9) comprising
- an individual unit identity (15) of an individual unit;
- at least one of text and image;
- at least one link (17) linking at least one journal data item (7) related to the individual unit data item (9) to the individual unit data item (9);
- each journal data item (7) comprising at least one of text, image, symbol and binary data.

20. Data repository according to claim 19, wherein the journal data items (7) are related to at least one point of time (19) in relation to at least one of the processes (19) of manufacturing, testing, distributing, mounting, using, servicing, maintaining, and dismounting the individual unit.

21. Data repository according to claim 19 incorporated in a memory.

22. Use of the device according to claim 1 to trace individual units.
